# EUROPÄISCHE PATENTSCHRIFT

(11) **EP 1 926 903 B1**
(45) Veröffentlichungstag und Bekanntmachung des Hinweises auf die Patenterteilung: **17.03.2010**
(21) Anmeldenummer: 06777079.2
(22) Anmeldetag: 26.08.2006
(51) Int. Cl.: F02F 3/00

(54) **KOLBEN FÜR EINE BRENNKRAFTMASCHINE**
PISTON FOR AN INTERNAL COMBUSTION ENGINE
PISTON POUR MOTEUR A COMBUSTION

(30) Priorität: 14.09.2005 DE 102005043747
(43) Veröffentlichungstag der Anmeldung: 04.06.2008
(73) Patentinhaber: GM Global Technology Operations, Inc., Detroit, MI 48265-3000 (US)
(72) Erfinder: BREIDENBACH, Paul, 55234 Bechenheim (DE); TAUSCHER, Carsten, 65468 Trebur (DE)
(74) Vertreter: Strauss, Peter
(86) Internationale Anmeldenummer: PCT/EP2006/008381
(87) Internationale Veröffentlichungsnummer: WO 2007/031188

(56) Entgegenhaltungen:
- EP-A- 0 385 390
- EP-A- 1 561 938
- EP-A2- 1 348 859
- GB-A- 130 411
- US-A1- 2002 007 730

## Beschreibung

Die vorliegende Erfindung betrifft einen Kolben für eine Brennkraftmaschine, insbesondere für einen Kraftfahrzeugmotor, nach dem Oberbegriff des Anspruchs 1. Ein solcher Kolben ist aus EP 0 385 390 A1 bekannt. Ein Kolben mit an den Rändern seitlicher Schilde angreifenden Stützrippen ist ferner aus EP 1 561 938 A1 bekannt.

Kolben für die Kraftmaschinen von Personenkraftwagen werden heutzutage im Allgemeinen aus Aluminium gefertigt. Sie weisen eine typische Kompressionshöhe, d.h. eine Entfernung zwischen der Oberkante des Kolbenbodens und einer Mittelachse der Kolbennabe, von typischerweise 23 bis 35 mm auf. Mit diesen Abmessungen werden bei optimierter Auslegung im Allgemeinen die Belastungsgrenzen des Materials erreicht. Um eine Brennkraftmaschine bei gleich bleibenden Außenabmessungen mit größerem Hubraum und leistungsstärker zu bauen oder um eine solche Maschine bei gleich bleibendem Hubraum kompakter und damit leichter und wirtschaftlicher zu machen, ist es wünschenswert, die Kompressionshöhe des Kolbens weiter reduzieren zu können.

Aufgabe der vorliegenden Erfindung ist, eine Gestaltung für einen Kolben anzugeben, welche dies erlaubt.

Dieses Ziel wird erfindungsgemäß erreicht durch einen Kolben wie in Anspruch 1 definiert.

Um eine Platz sparende Platzierung der Stützrippen zu ermöglichen, hat von den zwei gekrümmten Abschnitten jede Rippe eines Paars der zur Kolbennabe benachbarte Abschnitt einen Krümmungsmittelpunkt auf einer der jeweils andere Rippen des Paars zugewandten Seite, und der zum Kolbenhemd benachbarte Abschnitt der gleichen Rippe hat einen Krümmungsmittelpunkt auf einer von der jeweils anderen Rippe des Paars abgewandten Seite.

Zur Gewichtseinsparung kann die Nabe in Richtung der Achse ihres Bolzenauges zweigeteilt sein, und um dennoch eine ausreichende Formstabilität des Kolbenbodens zu gewährleisten, können die zwei Teile der Nabe durch eine an den Kolbenboden angeformte ringförmige Rippe verbunden sein.

Zur weiteren Versteifung können zwei weitere Paare von Stützrippen sich jeweils von der Nabe im Wesentlichen parallel zur Richtung der Achse ihres Bolzenauges zum Kolbenhemd hin erstrecken.

Vorzugsweise ist der erfindungsgemäße Kolben aus einem Eisenwerkstoff, etwa aus Guss oder Stahl, gefertigt. Da ein solcher Eisenwerkstoff eine höhere Festigkeit und einen höheren Elastizitätsmodul als Aluminium aufweist, kann die Wandstärke des Kolbens und die Breite des Kolbenhemdes abseits der Schilde kleiner gehalten werden als bei einem Aluminiumkolben gleicher Belastbarkeit. Dadurch sind besonders geringe Kompressionshöhen des Kolbens realisierbar.

Die Verwendung eines Eisenwerkstoffs ermöglicht es auch, einen Kolbenbolzen in einem Auge der Nabe durch einfache Pressung zu fixieren, so dass die bei Aluminiumkolben herkömmlicherweise praktizierte Sicherung des Bolzens durch Erzeugen von Hinterschnitten im Bolzenauge und Einsetzen von Sicherungsringen in die Hinterschnitte überflüssig wird.

Weitere Merkmale der Erfindung ergeben sich aus der nachfolgenden Beschreibung eines Ausführungsbeispiels. Es zeigen:
- Fig. 1: eine perspektivische Ansicht eines erfin- dungsgemäßen Kolbens aus Eisenwerkstoff;
- Fig. 2: einen Schnitt durch den Kolben aus Fig. 1; und
- Fig. 3: eine perspektivische Ansicht eines her- kömmlichen Aluminiumkolbens für einen Pkw-Motor.

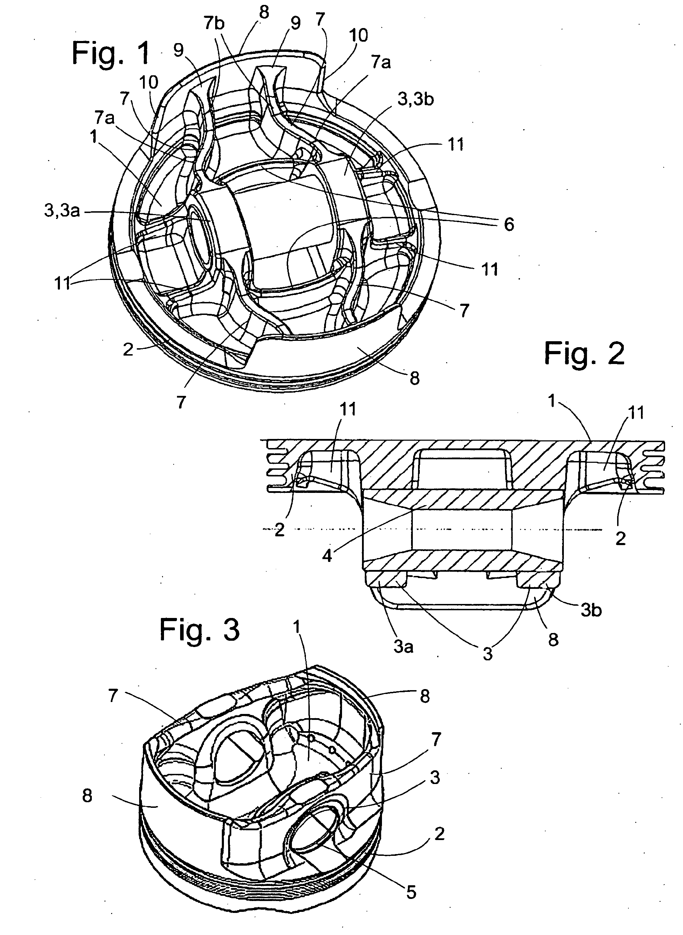

Wie der herkömmliche Kolben der Fig. 3 hat der in Fig. 1 und 2 gezeigte erfindungsgemäße Kolben eine der Brennkammer eines Zylinders zugewandte Bodenplatte 1, von der ein zylindrisches Kolbenhemd 2 absteht. Am äußeren Umfang des Kolbenhemdes 2 gebildete Rillen nehmen nicht dargestellte Kolbenringe auf. An der Unterseite der Bodenplatte 1 ist mittig eine Kolbennabe 3 gebildet, in der ein Kolbenbolzen 4 eingepresst ist. Zur Gewichtsersparnis ist die Kolbennabe 3 in Abschnitte 3a, 3b unterteilt, die jeweils ein Ende des Kolbenbolzens 4 einfassen und zwischen denen sich der Kolbenbolzen 4 frei erstreckt. Die Verwendung von Eisen als Werkstoff für den Kolben ermöglicht es, den Kolbenbolzen 4 durch Pressung dauerhaft fest in der Kolbennabe 3 zu haltern, anders als beim Aluminiumkolben der Fig. 3, bei dem in der Bohrung der Kolbennabe 3 zwei hinterschnittene Rillen 5 gebildet sind, um in ihnen Sicherungsringe zu montieren, die den (in Fig. 3 nicht gezeigten) Kolbenbolzen gegen Verrutschen sichern, indem sie an seinen Stirnseiten anliegen. Da die Sicherungsringe beim Kolben der Fig. 1 nicht benötigt werden, muss die Kolbennabe 3 nicht über die Enden des Bolzens 4 überstehen; daher kann eine an dem Kolbenbolzen 4 angreifende, nicht dargestellte Pleuelgabel schmal und folglich auch leicht an Gewicht gehalten werden.

Der zentrale Bereich der Bodenplatte 1 ist versteift durch eine durch die zwei Teile 3a, 3b der Kolbennabe verlaufende ringförmige Rippe 6 von geringer Höhe.

Von den zwei Teilen 3a, 3b der Kolbennabe aus erstrecken sich jeweils zwei geschwungene Stützrippen 7 zu zwei Schilden 8, die das Kolbenhemd 2 in Zylinderlängsrichtung verlängern. Die Stützrippen 7 haben jeweils zwei Abschnitte mit entgegengesetzten Krümmungsrichtungen, einen zur Kolbennabe 3 benachbarten, nach außen konvexen Abschnitt 7a und einen dem Schild 8 benachbarten, an der Außenseite konkaven Abschnitt 7b. Der in zwei Richtungen geschwungene Verlauf ermöglicht es den Stützrippen 7, einen zwischen den Schilden 8 und einer gegenüberliegenden Zylinderwand wirkenden Druck elastisch nachzugeben, ohne dabei ein nennenswertes den Schild 8 krümmendes Drehmoment auf den Schild auszuüben, so dass sich dieser großflächig an die Zylinderwand anpassen kann. Bei einer rein nach außen konvexen Krümmung der Stützrippen 7, wie in Fig. 3 gezeigt, führt eine elastische Stauchung der Rippen zu einem auf die Schilde 8 wirkenden Drehmoment, das auf eine Verringerung von deren Krümmung hinwirkt und so ein großflächiges Anliegen der Schilde 8 an der Zylinderwand erschwert.

Ein großflächiger Kontakt der Schilde 8 mit der Zylinderwand wird ferner durch die Tatsache begünstigt, dass die Angriffspunkte 9 der Rippen 7 an jedem Schild 8 von den seitlichen Rändern 10 des Schilds 8 deutlich zu dessen Mitte hin versetzt ist, so dass sich die Randregionen des Schildes 8 außerhalb der Angriffspunkte 9 der Zylinderwand relativ leicht anpassen können.

Beiderseits der Schnittebene der Fig. 2 und im Wesentlichen parallel zu dieser erstrecken sich Stützrippen 11 geringer Höhe zwischen der Kolbennabe 3 und dem Kolbenhemd 2.

Mit der oben beschriebenen Kolbenkonstruktion ist eine Kompressionshöhe von unter 20 mm realisierbar, ohne dass die Belastungsgrenze des Kolbenmaterials überschritten wird. Wegen der hohen Tragfähigkeit des Eisenwerkstoffs kann die Materialstärke im allgemeinen geringer gewählt werden als bei einem Aluminiumkolben, und da auch der Kolbenbolzen im Vergleich zu dem eines Aluminiumkolbens verkürzt werden kann, ist das Gewicht des erfindungsgemäßen Kolbens allenfalls unwesentlich höher als das eines für eine entsprechende Motorleistung ausgelegten Aluminiumkolbens. Die im Vergleich zu Aluminium schlechtere Wärmeleitfähigkeit des Eisenwerkstoffs und die geringe Stärke der Bodenplatte 1 führen zu einer geringeren Wärmeableitung aus dem Kolben über die Kolbenringe an einen den Zylinder umgebenden Kühlwassermantel. Die Temperatur der Bodenplatte 1 ist daher im Betrieb höher als die eines vergleichbaren Aluminiumkolbens, was sich im Teillastbetrieb als vorteilhaft in der Gemischbildung, besonders bei einem Direkteinspritzer, erweist.

### Bezugszeichenliste

- Kolbenboden: 1
- Kolbenhemd: 2
- Kolbennabe: 3
- Kolbenbolzen: 4
- Rille: 5
- Rippe: 6
- Stützrippe: 7
- Schild: 8
- Angriffspunkt: 9
- Rand: 10
- Stützrippe: 11

## Patentansprüche

1. Kolben für eine Brennkraftmaschine mit einem Kolbenboden (1), an den eine Kolbennabe (3) und ein Kolbenhemd (2) angeformt sind, sowie mit sich zwischen Kolbennabe (3) und Kolbenhemd (2) erstreckenden Stützrippen (7), die jeweils zwei in entgegengesetzte Richtungen gekrümmte Abschnitte (7a, 7b) umfassen, wobei das Kolbenhemd (2) zwei axial vorspringende Schilde (8) beiderseits der Nabe (3) bildet und sich jeweils ein Paar der Stützrippen (7) zwischen der Nabe (3) und jedem Schild (8) erstreckt, **dadurch gekennzeichnet, dass** jeder Schild (8) sich in Umfangsrichtung über Verbindungsbereiche (9) zwischen dem Schild (8) und dem Paar von Stützrippen (7) hinaus erstreckt.

2. Kolben nach Anspruch 1, **dadurch gekennzeichnet, dass** von den zwei gekrümmten Abschnitten (7a, 7b) jeder Rippe (7) eines Paars der zur Kolbennabe (3) benachbarte Abschnitt (7a) einen Krümmungsmittelpunkt auf einer der jeweils anderen Rippe (7) des Paars zugewandten Seite und der zum Kolbenhemd (2) benachbarte Abschnitt (7b) einen Krümmungsmittelpunkt auf einer von der jeweils anderen Rippe (7) des Paars abgewandten Seite besagter jeder Rippe (7) hat.

3. Kolben nach einem der vorhergehenden Ansprüche, **dadurch gekennzeichnet, dass** die Nabe (3) in Richtung der Achse ihres Bolzenauges zweigeteilt ist und die zwei Teile (3a, 3b) der Nabe (3) durch eine an den Kolbenboden (1) angeformte ringförmige Rippe (6) verbunden sind.

4. Kolben nach einem der vorhergehenden Ansprüche, **dadurch gekennzeichnet, dass** zwei weitere Paare von Stützrippen (11) sich jeweils von der Nabe (3) im Wesentlichen parallel zur Richtung der Achse ihres Bolzenauges zum Kolbenhemd (2) erstrecken.

5. Kolben nach einem der vorhergehenden Ansprüche, **dadurch gekennzeichnet, dass** er aus einem Eisenwerkstoff gefertigt ist.

6. Kolben nach Anspruch 5, **dadurch gekennzeichnet, dass** ein Kolbenbolzen (4) in einem Auge der Nabe (3) gepresst ist.

## Claims

1. A piston for an internal combustion engine, comprising a piston top (1) on which a piston hub (3) and a piston skirt (2) are formed, and support ribs (7) which extend between the piston hub (3) and the piston skirt (2) and each comprise two sections (7a, 7b) curved in opposite directions, with the piston skirt (2) forming two axially protruding shields (8) on either side of the hub (3) and one pair each of the support ribs (7) extending between the hub (3) and each shield (8), **characterized in that** each shield (8) extends in the circumferential direction over connecting regions (9) between the shield (8) and the pair of support ribs (7).

2. A piston according to claim 1, **characterized in that** of the two curved sections (7a, 7b) of each rib (7) of a pair the section (7a) adjacent to the piston hub (3) has a center of curvature on a side facing the respective other rib (7) of the pair and the section (7b) adjacent to the piston skirt (2) has a center of curvature on a side of said each rib (7) which is averted from the respectively other rib (7) of the pair.

3. A piston according to one of the preceding claims, **characterized in that** the hub (3) is divided into two parts in the direction of the axis of its pin boss and the two parts (3a, 3b) of the hub (3) are connected by an annular rib (6) which is formed on the piston top (1).

4. A piston according to one of the preceding claims, **characterized in that** two further pairs of support ribs (11) each extend from the hub (3) to the piston skirt (2) in a substantially parallel manner in relation to the direction of the axis of its pin boss.

5. A piston according to one of the preceding claims, **characterized in that** it is made of an iron material.

6. A piston according to claim 5, **characterized in that** a piston pin (4) is pressed into an eye of the hub (3).

## Revendications

1. Piston pour un moteur à combustion interne avec un fond de piston (1) sur lequel est formé un moyeu de piston (3) et une chemise de piston (2) et avec des nervures de support (7) s'étendant entre le moyeu de piston (3) et la chemise de piston (2), qui comprennent chacune deux parties (7a, 7b) courbées dans des directions opposées, la chemise de piston (2) formant deux brides (8) en saillie dans le sens axial de part et d'autre du moyeu (3) et chaque paire de nervures de support (7) s'étendant entre le moyeu (3) et chaque bride (8), **caractérisé en ce que** chaque bride (8) s'étend dans le sens de la circonférence au-delà de zones de liaison (9) entre la bride (8) et la paire de nervures de support (7).

2. Piston selon la revendication 1, **caractérisé en ce que** sur les deux parties courbes (7a, 7b) de chaque nervure (7) d'une paire, la partie (7a) voisine du moyeu du piston (3) a un centre de courbure sur un côté orienté vers l'autre nervure (7) de la paire et la partie (7b) voisine de la chemise de piston (2) a un centre de courbure sur un côté de la nervure (7) orienté à l'opposé de l'autre nervure (7) de la paire.

3. Piston selon l'une des revendications précédentes, **caractérisé en ce que** le moyeu (3) est partagé en deux dans le sens de l'axe de son bossage et les deux parties (3a, 3b) du moyeu (3) sont reliées par une nervure annulaire (6) formée sur le fond du piston (1).

4. Piston selon l'une des revendications précédentes, **caractérisé en ce que** deux autres paires de nervures de support (11) s'étendent chacune à partir du moyeu (3) dans un sens sensiblement parallèle à la direction de l'axe de leur bossage vers la chemise de piston (2).

5. Piston selon l'une des revendications précédentes, **caractérisé en ce qu'**il est fabriqué dans un matériau ferreux.

6. Piston selon la revendication 5, **caractérisé en ce qu'**un axe de piston (4) est enfoncé dans un bossage du moyeu (3).
